# EUROPEAN PATENT APPLICATION

(11) **EP 4 484 784 A1**
(43) Date of publication of application: **01.01.2025**
(21) Application number: 22935711.6
(22) Date of filing: 14.12.2022
(51) Int. Cl.: F16C 33/54, F16C 19/26

(54) **ROLLING BEARING**

(30) Priority: 28.03.2022 JP 2022051990
(71) Applicant: Nippon Thompson Co., Ltd., Tokyo 108-8586 (JP)
(72) Inventor: SHIMADA Yoshihiro, Tokyo 108-8586 (JP); HIDANO Kengo, Kamakura-shi, Kanagawa 248-0022 (JP); ISHIZUKA Naoya, Kamakura-shi, Kanagawa 248-0022 (JP); YANAGITANI Akihide, Kamakura-shi, Kanagawa 248-0022 (JP)
(74) Representative: Page White Farrer
(86) International application number: PCT/JP2022/045999
(87) International publication number: WO 2023/188583

(57) **Abstract**

A rolling bearing includes an outer ring, a plurality of rolling elements rolling on a raceway surface, and a ring-shaped rolling element fall-off prevention member formed by bending a strip-shaped metal member into a ring shape and welding two ends, and preventing the rolling elements from falling off toward an inside diameter side. The rolling element fall-off prevention member includes a plurality of pillar portions and a connecting portion. The connecting portion includes a welded portion, a first cut portion, and a second cut portion. As viewed in the axial direction, the first cut portion and the second cut portion are each provided within an angle range of not less than 45° and not more than 315° from the welded portion around a center of a shaft. The second cut portion is provided at a position of a window portion located at a position corresponding to 180°, or at a position of a window portion adjacent to the window portion located at the position corresponding to 180°, with respect to a position of the first cut portion around the center of the shaft.

## Description

### Technical Field

The present disclosure relates to a rolling bearing. The present application claims priority based on Japanese Patent Application No. 2022-51990 filed on March 28, 2022, the entire contents of which are incorporated herein by reference.

### Background Art

A roller bearing for a steering device including two ring-shaped inner and outer cages (retainers) each having a plurality of pockets and a plurality of rollers retained across the pockets of the two retainers is known (see, for example, Patent Literature 1). The roller bearing for a steering device disclosed in Patent Literature 1 retains the rollers with the two inner and outer retainers.

### Citation List

### Patent Literature

Patent Literature 1: Japanese Patent Application Laid-Open No. 2007-57075

### Summary of Invention

### Technical Problem

The roller bearing for a steering device disclosed in Patent Literature 1 is complicated in configuration because it adopts the configuration of retaining the rollers as the rolling elements with two inner and outer retainers. For a rolling bearing, it is desirable to adopt an inexpensive configuration by reducing costs while preventing the rolling elements from falling off.

Therefore, one of the objects is to provide a rolling bearing that is capable of preventing the rolling elements from falling off with a relatively simple configuration while reducing costs.

### Solution to Problem

A rolling bearing according to the present disclosure is a rolling bearing supporting a shaft, which includes: an outer ring having a raceway surface on an inner circumferential surface thereof; a plurality of rolling elements rolling on the raceway surface; and a ring-shaped rolling element fall-off prevention member arranged on an inside diameter side of the outer ring to prevent the rolling elements from falling off toward the inside diameter side, the fall-off prevention member having a plurality of window portions penetrating in a radial direction so as to expose rolling surfaces of the rolling elements, the fall-off prevention member being formed by bending a strip-shaped metal member into a ring shape and welding two ends thereof. The rolling element fall-off prevention member includes a plurality of pillar portions extending in an axial direction and arranged to form the plurality of window portions each spaced in a circumferential direction by a distance shorter than a diameter of the rolling elements, and a connecting portion extending in the circumferential direction and connecting ends of the plurality of pillar portions. The connecting portion includes a welded portion, a first cut portion provided at a position avoiding the pillar portions, and a second cut portion provided at a position avoiding the pillar portions and the first cut portion. As viewed in the axial direction, the first cut portion and the second cut portion are each provided within an angle range of not less than 45° and not more than 315° from the welded portion around a center of the shaft. The second cut portion is provided at a position of the window portion located at a position corresponding to 180°, or at a position of the window portion adjacent to the window portion located at the position corresponding to 180°, with respect to a position of the first cut portion around the center of the shaft.

### Advantageous Effects of Invention

The rolling bearing described above is capable of preventing the rolling elements from falling off with a relatively simple configuration while reducing costs.

### Brief Description of Drawings

FIG. 1 is a schematic perspective view of a rolling bearing in Embodiment 1 of the present disclosure.
FIG. 2 is a schematic cross-sectional view of a portion of the rolling bearing shown in FIG. 1.
FIG. 3 is a schematic cross-sectional view when cut in a cross section indicated by arrows III-III in FIG. 2
FIG. 4 is a schematic perspective view of a rolling element fall-off prevention member included in the rolling bearing shown in FIG. 1.
FIG. 5 is an enlarged view of a portion of the rolling element fall-off prevention member shown in FIG. 4.
FIG. 6 is an enlarged view of a region including a cut portion, described later, of the rolling element fall-off prevention member shown in FIG. 4.
FIG. 7 is a schematic view of the rolling element fall-off prevention member as viewed in the axial direction.
FIG. 8 is a schematic view of a rolling element fall-off prevention member included in a rolling bearing in Embodiment 2 of the present disclosure, as viewed in the axial direction.
FIG. 9 is a schematic view of a rolling element fall-off prevention member included in a rolling bearing in Embodiment 3 of the present disclosure, as viewed in the axial direction.
FIG. 10 is a schematic view of a rolling element fall-off prevention member included in a rolling bearing in Embodiment 4 of the present disclosure, as viewed in the axial direction.

### Description of Embodiments

### [Outline of Embodiments]

A rolling bearing of the present disclosure is a rolling bearing supporting a shaft, which includes: an outer ring having a raceway surface on an inner circumferential surface thereof; a plurality of rolling elements rolling on the raceway surface; and a ring-shaped rolling element fall-off prevention member arranged on an inside diameter side of the outer ring to prevent the rolling elements from falling off toward the inside diameter side, the fall-off prevention member having a plurality of window portions penetrating in a radial direction so as to expose rolling surfaces of the rolling elements, the fall-off prevention member being formed by bending a strip-shaped metal member into a ring shape and welding two ends thereof. The rolling element fall-off prevention member includes a plurality of pillar portions extending in an axial direction and arranged to form the plurality of window portions each spaced in a circumferential direction by a distance shorter than a diameter of the rolling elements, and a connecting portion extending in the circumferential direction and connecting ends of the plurality of pillar portions. The connecting portion includes a welded portion, a first cut portion provided at a position avoiding the pillar portions, and a second cut portion provided at a position avoiding the pillar portions and the first cut portion. As viewed in the axial direction, the first cut portion and the second cut portion are each provided within an angle range of not less than 45° and not more than 315° from the welded portion around a center of the shaft. The second cut portion is provided at a position of the window portion located at a position corresponding to 180°, or at a position of the window portion adj acent to the window portion located at the position corresponding to 180°, with respect to a position of the first cut portion around the center of the shaft.

For a rolling bearing including a plurality of rollers as the rolling elements and an outer ring, the present inventors considered the following. For example, in order to increase the load rating as a rolling bearing, firstly, it would be desirable to adopt a configuration of a full roller type, i.e., the configuration in which there is no member including a retainer between the rollers in the circumferential direction. In this case, the outer ring is provided on the outside diameter side of the rollers, which prevents the rollers from falling off toward the outside diameter side. However, if no inner ring is provided on the inside diameter side, the rollers would fall off from the inside diameter side when the rolling bearing is mounted on or dismounted from a shaft. The inventors considered that in order to prevent the rollers from falling off from the inside diameter side, it would be desirable to provide a rolling element fall-off prevention member having a plurality of window portions formed to expose the rolling surfaces of the rollers on the inside diameter side of the outer ring. As used herein, the rolling element fall-off prevention member is a member for preventing the rolling elements from falling off from the inside diameter side by sandwiching the rolling elements between the member and the outer ring in the radial direction at the time of mounting the rolling bearing on or dismounting it from the shaft, which is not a member for guiding the rolling elements. That is, the rolling element fall-off prevention member is different from a retainer which retains the rolling elements in the bearing at equal intervals to prevent contact between the rolling elements.

In obtaining the rolling element fall-off prevention member having the configuration described above, the present inventors further conducted intensive studies to realize a relatively simple configuration while reducing costs. The inventors then considered that the cost reduction and simple configuration would be achieved if the rolling element fall-off prevention member could be produced by preparing a metal sheet, making it into a strip outer shape, punching the metal sheet in the thickness direction so as to form a plurality of window portions, and bending it into an annular shape and welding two ends. For the rolling element fall-off prevention member thus produced, it would be necessary to mount the member on the inside diameter side of the outer ring with the rolling elements arranged on the rolling surface. Here, the inventors considered that the annular rolling element fall-off prevention member could be partially cut, and the cut portion could be utilized to mount the member on the inside diameter side of the outer ring. That is, the inventors considered that when mounting the rolling element fall-off prevention member, the ends of the cut portion could be overlapped to reduce the diameter, thereby reducing the diameter of the rolling element fall-off prevention member by elastic deformation, and in the state where the member is mounted on the inside diameter side of the outer ring, the portion reduced in diameter could be restored to the original state by utilizing the springiness of the rolling element fall-off prevention member, thereby allowing the rolling element fall-off prevention member to be disposed on the inside diameter side of the outer ring.

The present inventors further considered the number of cut portions and the positions to be cut. They then found the relationship between the welded portion, formed by welding the ends, and the number and positions of the cut portions. Specifically, they found that too small a number of cut portions would result in poor elastic deformation when reducing the diameter, making it difficult to mount the member on the inside diameter side of the outer ring. They also found that a plurality of cut portions provided too close to each other would create a region where the strength of the rolling element fall-off prevention member becomes locally small, which may cause the rollers to fall off when a load is applied. The present inventors further focused on the fact that the strength is smaller in the welded portion than in the other portions, and found that if the cut portion is provided near the welded portion, the welded portion would not be able to withstand the load and would break, causing the rollers to fall off. The present inventors then studied intensively and ultimately adopted the configuration of the present invention.

That is, the present inventors firstly found that at least two cut portions would be necessary. They also found that the two cut portions could not be located at arbitrary positions in the circumferential direction. After careful investigation of the relationship between the position of the welded portion and the positions of the cut portions, they found that, as viewed in the axial direction, it would be necessary for the first cut portion and the second cut portion to be provided within an angle range of not less than 45° and not more than 315° from the welded portion around the center of the shaft. For the two cut portions, they found that it would be necessary for the second cut portion to be provided at a position of the window portion located at a position corresponding to 180°, or at a position of the window portion adjacent to the window portion located at the position corresponding to 180°, with respect to a position of the first cut portion around the center of the shaft. With the above configuration, the rolling element fall-off prevention member can be properly mounted on the inside diameter side of the outer ring by elastic deformation utilizing the first and second cut portions. Even if an impact is applied after mounting, the rolling elements can be prevented from falling off from the inside diameter side. Such a rolling element fall-off prevention member can be produced by punching a metal sheet, bending it into an annular shape, and welding two ends, thereby realizing a relatively simple structure while reducing costs. Accordingly, the rolling bearing described above is capable of preventing the rolling elements from falling off with a relatively simple configuration while reducing costs.

It should be noted that "the second cut portion being provided at a position of the window portion located at a position corresponding to 180° ... with respect to a position of the first cut portion around the center of the shaft" means that, in the case where there is a window portion at the position corresponding to 180°, the second cut portion is provided at the position of that window portion, and in the case where there is a pillar portion at the position corresponding to 180°, the second cut portion is provided at a position of one of the two window portions adjacent to that pillar portion. That is, "the second cut portion being provided at a position of the window portion located at a position corresponding to 180°, or at a position of the window portion adjacent to the window portion located at the position corresponding to 180°, with respect to a position of the first cut portion around the center of the shaft" means that, in the case where there is a window portion at the position corresponding to 180°, the second cut portion is provided at one of positions of a total of three window portions including the position of that window portion and the positions of the two adjacent window portions, and in the case where there is a pillar portion at the position corresponding to 180°, the second cut portion is provided at a position of one of a total of four window portions which are two window portions adj acent to that pillar portion and additional window portions adjacent to those two window portions.

In the above rolling bearing, the first cut portion may be located 90° away from the welded portion around the center of the shaft. The second cut portion may be located 270° away from the welded portion around the center of the shaft. This can more reliably prevent the rolling elements from falling off.

In the above rolling bearing, the connecting portion may further include a third cut portion provided at a position avoiding the pillar portions, the first cut portion, and the second cut portion, and a fourth cut portion provided at a position avoiding the pillar portions, the first cut portion, the second cut portion, and the third cut portion. The third cut portion and the fourth cut portion may each be provided within an angle range of not less than 45° and not more than 315° from the welded portion around the center of the shaft. The fourth cut portion may be provided at a position of the window portion located at a position corresponding to 180°, or at a position of the window portion adjacent to the window portion located at the position corresponding to 180°, with respective to a position of the third cut portion around the center of the shaft. This can reduce the amount of elastic deformation at each of the cut portions, allowing for more proper mounting.

In the above rolling bearing, the first cut portion may be located 45° away from the welded portion around the center of the shaft. The second cut portion may be located 225° away from the welded portion around the center of the shaft. The third cut portion may be located 135° away from the welded portion around the center of the shaft. The fourth cut portion may be located 315° away from the welded portion around the center of the shaft. This allows for even more proper mounting, keeping the cut portions as far apart as possible.

In the above rolling bearing, the rolling elements may be rollers. The rolling bearing may be of a full roller type. This can increase the load rating of the rolling bearing.

### [Specific Embodiments]

Specific embodiments of the rolling bearing of the present disclosure will be described below with reference to the drawings. In the drawings referenced below, the same or corresponding portions are denoted by the same reference numerals and the description thereof will not be repeated.

### (Embodiment 1)

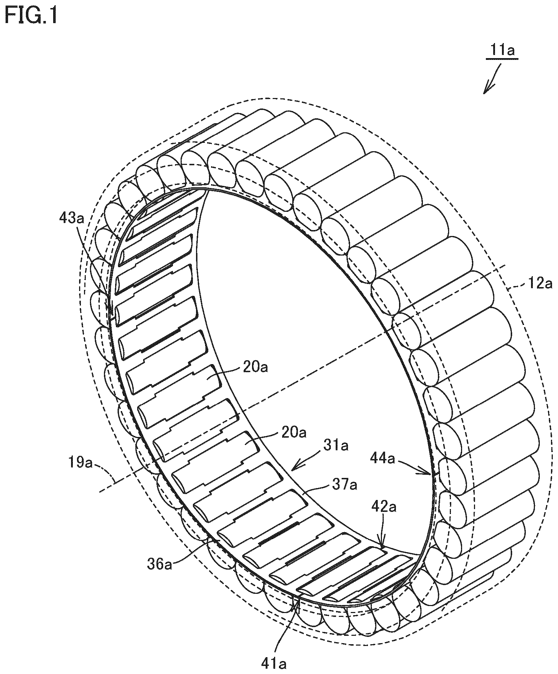

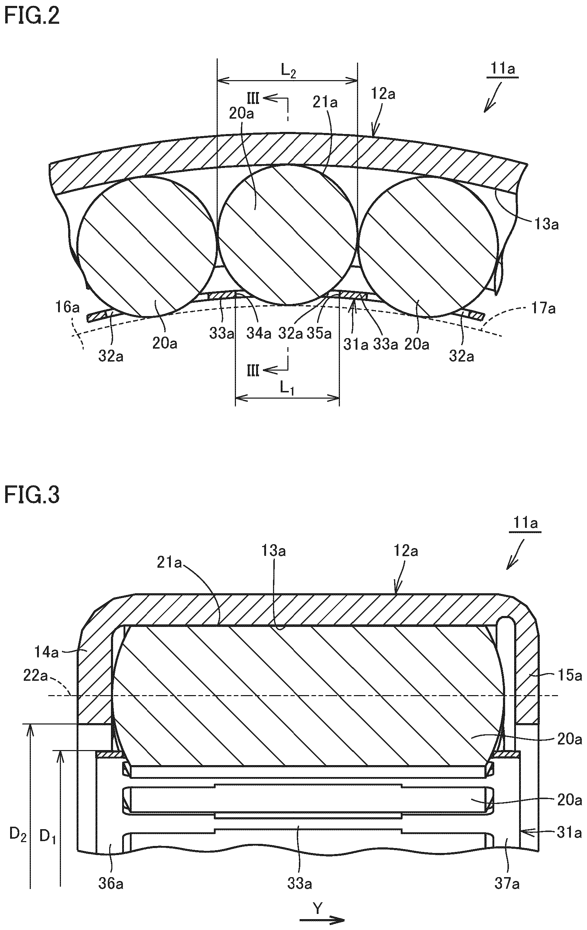

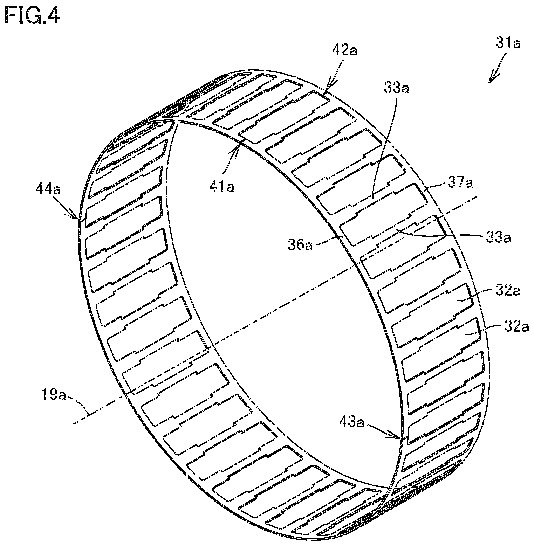

Firstly, one embodiment of the present disclosure, Embodiment 1, will be described. FIG. 1 is a schematic perspective view of a rolling bearing in Embodiment 1 of the present disclosure. For ease of understanding, the outer ring included in the rolling bearing, which will be described later, is shown by dotted lines in FIG. 1. FIG. 2 is a schematic cross-sectional view of a portion of the rolling bearing shown in FIG. 1. FIG. 2 is a cross-sectional view when cut in a plane perpendicular to the axial direction of a shaft supported by the rolling bearing. For ease of understanding, the shaft supported by the rolling bearing is shown by a dotted line in FIG. 2. FIG. 3 is a schematic cross-sectional view when cut in a cross section indicated by arrows III-III in FIG. 2. FIG. 3 corresponds to the case when cut in a plane including the center of the shaft supported by the rolling bearing. In the present embodiment, the axial direction is a direction indicated by arrow Y in FIG. 3 or its opposite direction. FIG. 4 is a schematic perspective view of a rolling element fall-off prevention member included in the rolling bearing shown in FIG. 1.

Referring to FIGS. 1 to 4, the rolling bearing 11a in Embodiment 1 of the present disclosure supports a shaft 16a shown in FIG. 2. A center 19a of the rolling bearing 11a, shown by a long dashed short dashed line in FIG. 1, is also the center of the shaft 16a.

The rolling bearing 11a includes an outer ring 12a, a plurality of rollers 20a as rolling elements, and a rolling element fall-off prevention member 31a for preventing the rollers 20a from falling off toward the inside diameter side. The outer ring 12a has a raceway surface 13a on its inner circumferential surface. The outer ring 12a includes a pair of flange portions 14a, 15a extending from both ends in the axial direction to the inside diameter side. The flange portions 14a and 15a protrude in equal amounts toward the inside diameter side. In the present embodiment, the outer ring 12a is a shell type outer ring. For example, the outer ring 12a is produced by subjecting a single metal sheet to drawing to form it into a cup shape, punching out the bottom of the cup to form one flange portion 14a, and bending the other edge toward the inside diameter side to form the other flange portion 15a. Heat treatment is performed as required.

The rollers 20a roll on the raceway surface 13a of the outer ring 12a. The rollers 20a also roll on an outer circumferential surface of the shaft 16a as a raceway surface 17a. The rollers 20a each have a rolling surface 21a rolling on the raceway surfaces 13a and 17a. The rollers 20a have their both end surfaces chamfered. The rollers 20a are arranged on the inside diameter side of the outer ring 12a. The rollers 20a have their movement in the axial direction restricted by the pair of flange portions 14a, 15a of the outer ring 12a. In FIG. 3, a rolling axial center 22a of the roller 20a is indicated by the long dashed double-short dashed line.

The rolling bearing 11a adopts a full roller type. In other words, the rolling bearing 11a adopts a configuration in which no member is arranged between the rollers 20a. With this, the load rating of the rolling bearing 11a can be increased. For mounting the rollers 20a, grease is applied to the inner circumferential surface of the outer ring 12a, including the raceway surface 13a, and each roller 20a is affixed to the grease for mounting.

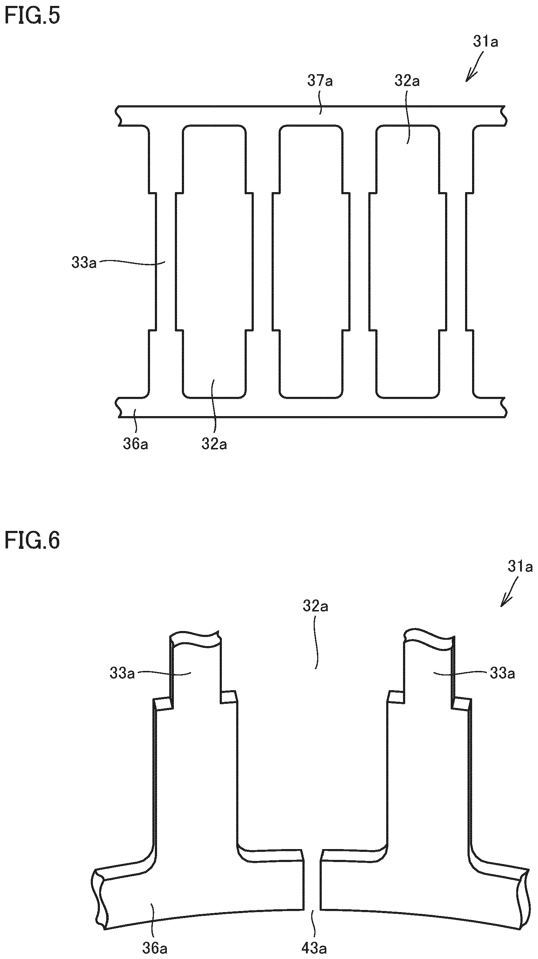

The configuration of the rolling element fall-off prevention member 31a will now be described. FIG. 5 is an enlarged view of a portion of the rolling element fall-off prevention member 31a shown in FIG. 4. FIG. 6 is an enlarged view of a region including a first cut portion 43a, described later, of the rolling element fall-off prevention member 31a shown in FIG. 4.

Referring also to FIGS. 5 and 6, the rolling element fall-off prevention member 31a is arranged on the inside diameter side of the outer ring 12a. The rolling element fall-off prevention member 31a has an annular shape. The rolling element fall-off prevention member 31a has a diameter D₁ which is smaller than a diameter D₂ of the flange portions 14a, 15a of the outer ring 12a (see, in particular, FIG. 3). In other words, the rolling element fall-off prevention member 31a is configured so as not to interfere with the pair of flange portions 14a, 15a of the outer ring 12a in the radial direction. It should be noted that the diameter D₂ of the rolling element fall-off prevention member 31a is smaller than the pitch circle diameter (PCD) of the rollers 20a.

The rolling element fall-off prevention member 31a is made of metal. The rolling element fall-off prevention member 31a is produced by bending a strip-shaped metal member into an annular shape and welding two ends thereof. Immediately after welding, the welded portion would be slightly pointed toward the outside diameter side. The rolling element fall-off prevention member 31a is shaped into an annular outer shape and then its ends are connected by welding. It should be noted that the rolling element fall-off prevention member 31a may have its two ends connected by welding before being shaped into an annular outer shape. In other words, the shaping of the rolling element fall-off prevention member 31a into the annular shape may be performed either before or after welding. The rolling element fall-off prevention member 31a has springiness.

The rolling element fall-off prevention member 31a has a plurality of window portions 32a penetrating in the radial direction so as to expose the rolling surfaces 21a of the rollers 20a. The plurality of window portions 32a are arranged spaced apart in the circumferential direction. Such window portions 32a of the rolling element fall-off prevention member 31a are formed by preparing a strip-shaped metal member and punching and penetrating the metal member in the thickness direction into the shapes of the window portions 32a.

The rolling element fall-off prevention member 31a includes a plurality of pillar portions 33a extending in the axial direction, which are arranged to form the window portions 32a each spaced in the circumferential direction by a distance shorter than the diameter of the rollers 20a. In the present embodiment, the pillar portions 33a are each configured such that the central region in the axial direction is narrower than the regions at both ends in the axial direction. In other words, the window portions 32a are each configured such that the central region in the axial direction is wider than the regions at both ends in the axial direction. Referring to FIG. 2 in particular, the circumferential spacing of the window portions 32a, i.e., a distance L₁ between opposed sidewall surfaces 34a and 35a of adjacent pillar portions 33a, is shorter than the diameter L₂ of a roller 20a. It should be noted that the shape of the pillar portions 33a is not limited to the above. For example, the sidewall surfaces 34a and 35a of the pillar portions 33a may extend straight in the axial direction, or the pillar portions 33a may each be configured such that its central region in the axial direction is wider than the regions at both ends in the axial direction.

The rolling element fall-off prevention member 31a includes connecting portions 36a and 37a extending in the circumferential direction and connecting the respective ends of the pillar portions 33a. In the present embodiment, the connecting portions 36a and 37a are provided as a pair, spaced apart from each other in the axial direction, so as to connect the respective ends in the axial direction of the pillar portions 33a. In other words, in the rolling element fall-off prevention member 31a, one window portion 32a is formed by a space surrounded by the pair of connecting portions 36a, 37a and the two adjacent pillar portions 33a. As viewed from the inside in the radial direction, the rolling surface 21a of a roller 20a is exposed from the window portion 32a.

The connecting portions 36a and 37a have welded portions 41a and 42a, respectively, formed when the two ends are welded. The welded portions 41a and 42a, which are formed by bending a strip-shaped metal member into an annular shape and welding two ends, are provided at the same position in the circumferential direction. Also at the position where the welded portions 41a and 42a are arranged, a window portion 32a is formed by the adjacent pillar portions 33a and the pair of connecting portions 36a and 37a. The welded portions 41a, 42a, where the two ends of the strip-shaped metal member are joined by welding, are weld marks which are different in appearance and internal structure from the other portions of the connecting portions 36a and 37a, so the position in the circumferential direction of the welded portions 41a, 42a can be confirmed by visual inspection or analysis.

One connecting portion 36a includes a first cut portion 43a and a second cut portion 44a. The first cut portion 43a and the second cut portion 44a are each provided at a position avoiding the pillar portions 33a. Specifically, the one connecting portion 36a includes the welded portion 41a, the first cut portion 43a provided at a position avoiding the pillar portions 33a, and the second cut portion 44a provided at a position avoiding the pillar portions 33a and the first cut portion 43a. The other connecting portion 37a includes the welded portion 42a. In other words, the rolling element fall-off prevention member 31a has a configuration in which the one connecting portion 36a is cut at two places at positions avoiding the pillar portions 33a.

According to such a configuration, when mounting the rolling element fall-off prevention member, the two ends of each of the first cut portion 43a and the second cut portion 44a are overlapped to reduce the diameter, thereby reducing the diameter of the rolling element fall-off prevention member 31a by elastic deformation, and in the state where the member is mounted on the inside diameter side of the outer ring 12a, the portions reduced in diameter are restored to the original state by utilizing the springiness of the rolling element fall-off prevention member 31a, thereby allowing the rolling element fall-off prevention member 31a to be disposed on the inside diameter side of the outer ring 12a. In other words, by applying a force to reduce the diameter of the one connecting portion 36a and by utilizing the first cut portion 43a and the second cut portion 44a, the diameter of the one connecting portion 36a can be easily reduced temporarily by elastic deformation. Therefore, the rolling element fall-off prevention member 31a can be easily placed on the inside diameter side of the outer ring 12a with the connecting portion 36a reduced in diameter. After the rolling element fall-off prevention member 31a is placed on the inside diameter side of the outer ring 12a, when the force applied to reduce the diameter is released, the elastically deformed rolling element fall-off prevention member 31a attempts to restore the original shape, resulting in a state where the rollers 20a are partially accommodated in the corresponding window portions 32a.

For the shapes of the first cut portion 43a and the second cut portion 44a, it has been configured such that they are each cut at a cutting plane extending straight in the axial direction, as shown in FIG. 6, and so as to have a cutting allowance. However, not limited thereto, the first cut portion 43a and the second cut portion 44a may be formed by cutting them at cutting planes inclined with respect to the axial direction, or the cutting allowance may be eliminated. The cutting plane may have irregularities.

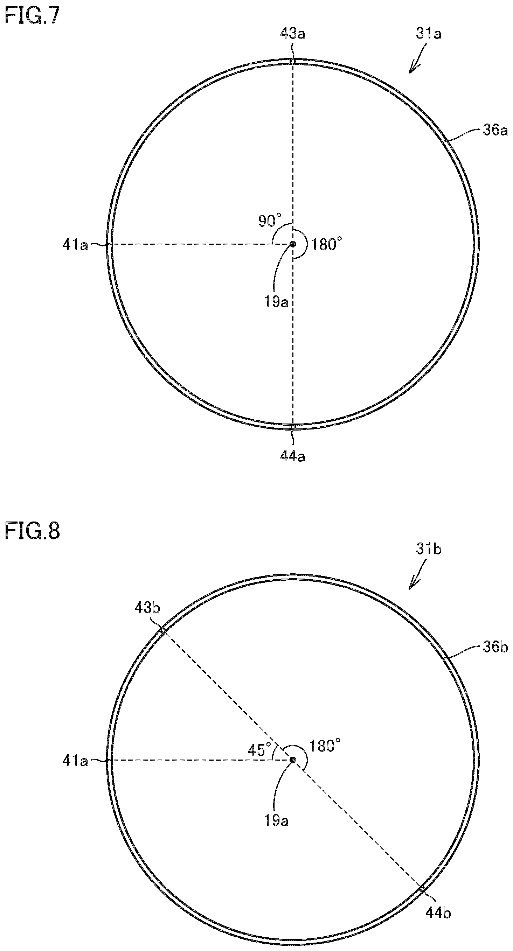

The positional relationship between the welded portion 41a, the first cut portion 43a, and the second cut portion 44a in the connecting portion 36a will now be described. FIG. 7 is a schematic view of the rolling element fall-off prevention member 31a as viewed in the axial direction. FIG. 7 is a view in the direction indicated by the arrow Y in FIG. 3.

Referring also to FIG. 7, as viewed in the axial direction, the first cut portion 43a and the second cut portion 44a are each provided within an angle range of not less than 45° and not more than 315° from the welded portion 41a around the center 19a of the shaft. The second cut portion 44a is provided at a position of the window portion 32a located at a position corresponding to 180°, or at a position of the window portion 32a adj acent to the window portion 32a located at the position corresponding to 180°, with respect to the position of the first cut portion 43a around the center 19a of the shaft. In the present embodiment, the first cut portion 43a is located 90° away from the welded portion 41a around the center 19a of the shaft. The second cut portion 44a is located 270° (90°+180°) away from the welded portion 41a around the center 19a of the shaft. The second cut portion 44a is provided at the position of the window portion 32a located at the position corresponding to 180° with respect to the position of the first cut portion 43a around the center 19a of the shaft.

According to the rolling bearing 11a described above, it is possible to prevent the rollers 20a from falling off with a relatively simple configuration while reducing costs.

In the present embodiment, the first cut portion 43a is located 90° away from the welded portion 41a around the center 19a of the shaft. The second cut portion 44a is located 270° away from the welded portion 41a around the center 19a of the shaft. Thus, it is possible to more reliably prevent the rollers 20a from falling off.

The relationship between the number of the cut portions and cut positions in Embodiment 1 above and the drop test is shown in Table 1. Table 1 also shows the test results for Embodiment 2, Embodiment 3, and Embodiment 4 below.

**[Table 1]**

| | Number of Cuts | Cut Positions | Drop Test Results |
|---|---|---|---|
| Sample 1 | 2 | 90°, 270° | Good |
| Sample 2 | 4 | 0°, 90°, 180°, 270° | Rollers fallen off, Welded portion broken |
| Sample 3 | 2 | 45°, 225° | Good |
| Sample 4 | 4 | 45°, 135°, 225°, 315° | Good |
| Sample 5 | 6 | 45°, 90°, 135°, 225°, 270°, 315° | Good |

In Table 1, Sample 1 corresponds to the case of Embodiment 1. Here, a drop test was performed as an evaluation test. For the drop test, the drop test for packaged freights based on JIS Z0200 was applied, in which the height was set to 40 cm, and samples were dropped with the corner down at eight different corner locations. The classification was set to Level III. Sample 2 shows the case in which, in addition to the cut locations in Sample 1, cut portions were provided at the welded portion 41a and at a position 180° away from the welded portion 41a around the center 19a of the shaft. As can be understood from Table 1, the drop test results for Sample 1 were good, indicating that the rollers 20a were prevented from falling off. In the case of Sample 2, the rollers 20a fell off due to the breakage of the welded portion 41a.

### (Embodiment 2)

Another embodiment, Embodiment 2, will now be described. FIG. 8 is a schematic view of a rolling element fall-off prevention member 31b included in a rolling bearing in Embodiment 2 of the present disclosure, as viewed in the axial direction.

Referring also to FIG. 8, in a connecting portion 36b included in the rolling element fall-off prevention member 31b, as viewed in the axial direction, a first cut portion 43b and a second cut portion 44b are each provided within an angle range of not less than 45° and not more than 315° from the welded portion 41a around the center 19a of the shaft. The second cut portion 44b is provided at a position of a window portion 32a located at a position corresponding to 180°, or at a position of a window portion 32a adjacent to the window portion 32a located at the position corresponding to 180°, with respect to the position of the first cut portion 43b around the center 19a of the shaft. In the present embodiment, the first cut portion 43b is located 45° away from the welded portion 41a around the center 19a of the shaft. The second cut portion 44b is located 225° (45°+180°) away from the welded portion 41a around the center 19a of the shaft. The second cut portion 44b is provided at the position of the window portion 32a located at the position corresponding to 180° with respect to the position of the first cut portion 43b around the center 19a of the shaft.

The above configuration also makes it possible to prevent the rollers 20a from falling off with a relatively simple configuration while reducing costs. The drop test results are as shown for Sample 3 in Table 1.

### (Embodiment 3)

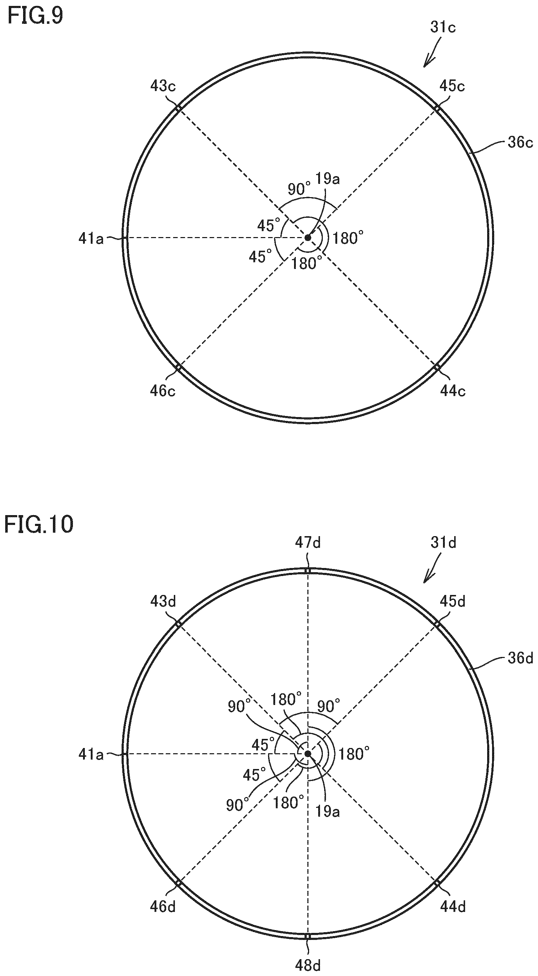

Yet another embodiment, Embodiment 3, will now be described. FIG. 9 is a schematic view of a rolling element fall-off prevention member 31c included in a rolling bearing in Embodiment 3 of the present disclosure, as viewed in the axial direction.

Referring also to FIG. 9, a connecting portion 36c included in the rolling element fall-off prevention member 31c includes the welded portion 41a, a first cut portion 43c, a second cut portion 44c, a third cut portion 45c, and a fourth cut portion 46c. The first cut portion 43c is provided at a position avoiding the pillar portions 33a. The second cut portion 44c is provided at a position avoiding the pillar portions 33a and the first cut portion 43c. The third cut portion 45c is provided at a position avoiding the pillar portions 33a, the first cut portion 43c, and the second cut portion 44c. The fourth cut portion 46c is provided at a position avoiding the pillar portions 33a, the first cut portion 43c, the second cut portion 44c, and the third cut portion 45c. The first cut portion 43c, the second cut portion 44c, the third cut portion 45c, and the fourth cut portion 46c are each provided at an angle of not less than 45° and not more than 315° from the welded portion 41a. The fourth cut portion 46c is provided at a position of a window portion 32a located at a position corresponding to 180°, or at a position of a window portion 32a adjacent to the window portion 32a located at the position corresponding to 180°, with respect to a position of the third cut portion 45c around the center 19a of the shaft.

In the present embodiment, the first cut portion 43c is located 45° away from the welded portion 41a around the center 19a of the shaft. The second cut portion 44c is located 225° (45°+180°) away from the welded portion 41a around the center 19a of the shaft. The third cut portion 45c is located 135° (45°+90°) away from the welded portion 41a around the center 19a of the shaft. The fourth cut portion 46c is located 315° (45°+90°+180°) away from the welded portion 41a around the center 19a of the shaft.

The above configuration also makes it possible to prevent the rollers 20a from falling off with a relatively simple configuration while reducing costs. In this case, the amount of elastic deformation at each of the cut portions can be made small, allowing for more proper mounting. Keeping the cut portions as far apart as possible allows for even more proper mounting. The drop test results are as shown for Sample 4 in Table 1.

### (Embodiment 4)

Yet another embodiment, Embodiment 4, will now be described. FIG. 10 is a schematic view of a rolling element fall-off prevention member 31d included in a rolling bearing in Embodiment 4 of the present disclosure, as viewed in the axial direction.

Referring also to FIG. 10, a connecting portion 36d included in the rolling element fall-off prevention member 31d includes the welded portion 41a, a first cut portion 43d, a second cut portion 44d, a third cut portion 45d, a fourth cut portion 46d, a fifth cut portion 47d, and a sixth cut portion 48d. The first cut portion 43d is provided at a position avoiding the pillar portions 33a. The second cut portion 44d is provided at a position avoiding the pillar portions 33a and the first cut portion 43d. The third cut portion 45d is provided at a position avoiding the pillar portions 33a, the first cut portion 43d, and the second cut portion 44d. The fourth cut portion 46d is provided at a position avoiding the pillar portions 33a, the first cut portion 43d, the second cut portion 44d, and the third cut portion 45d. The fifth cut portion 47d is provided at a position avoiding the pillar portions 33a, the first cut portion 43d, the second cut portion 44d, the third cut portion 45d, and the fourth cut portion 46d. The sixth cut portion 48d is provided at a position avoiding the pillar portions 33a, the first cut portion 43d, the second cut portion 44d, the third cut portion 45d, the fourth cut portion 46d, and the fifth cut portion 47d.

In the present embodiment, the first cut portion 43d is located 45° away from the welded portion 41a around the center 19a of the shaft. The second cut portion 44d is located 225° (45°+180°) away from the welded portion 41a around the center 19a of the shaft. The third cut portion 45d is located 135° (45°+90°) away from the welded portion 41a around the center 19a of the shaft. The fourth cut portion 46d is located 315° (45°+90°+180°) away from the welded portion 41a around the center 19a of the shaft. The fifth cut portion 47d is located 90° away from the welded portion 41a around the center 19a of the shaft. The sixth cut portion 48d is located 270° (90°+180°) away from the welded portion 41a around the center 19a of the shaft.

The above configuration also makes it possible to prevent the rollers 20a from falling off with a relatively simple configuration while reducing costs. In this case, the amount of elastic deformation at each of the cut portions can be made small, allowing for more proper mounting. Keeping the cut portions as far apart as possible allows for even more proper mounting. The drop test results are as shown for Sample 5 in Table 1.

### (Other Embodiments)

While the rolling elements in the above embodiments are rollers, the present invention is not limited thereto and the rolling elements may be balls.

While the outer ring in the above embodiments includes a pair of flange portions, the present invention is not limited thereto and the outer ring may not include one or both of the flange portions. In such a case, it may be configured to restrict the movement of the rolling elements in the axial direction at the pair of connecting portions constituting the window portions of the rolling element fall-off prevention member.

It should be noted that in the above embodiments, the shaft may rotate, or the outer ring may be configured to rotate.

It should be understood that the embodiments disclosed herein are illustrative and non-restrictive in every respect. The scope of the present invention is defined by the terms of the claims, and is intended to include any modifications within the scope and meaning equivalent to the terms of the claims.

### Reference Signs List

11a: rolling bearing; 12a: outer ring; 13a, 17a: raceway surface; 14a, 15a: flange portion; 16a: shaft; 19a: center; 21a: rolling surface; 22a: rolling axial center; 31a, 31b, 31c, 31d: rolling element fall-off prevention member; 32a: window portion; 33a: pillar portion; 34a, 35a: sidewall surface; 36a, 36b, 36c, 36d, 37a: connecting portion; 41a, 42a: welded portion; 43a, 43b, 43c, 43d: first cut portion; 44a, 44b, 44c, 44d: second cut portion; 45c, 45d: third cut portion; 46c, 46d: fourth cut portion; 47: fifth cut portion; and 48d: sixth cut portion.

## Claims

1. A rolling bearing supporting a shaft, the rolling bearing comprising:
an outer ring having a raceway surface on an inner circumferential surface thereof;
a plurality of rolling elements rolling on the raceway surface; and
a ring-shaped rolling element fall-off prevention member arranged on an inside diameter side of the outer ring to prevent the rolling elements from falling off toward the inside diameter side, the fall-off prevention member having a plurality of window portions penetrating in a radial direction so as to expose rolling surfaces of the rolling elements, the fall-off prevention member being formed by bending a strip-shaped metal member into a ring shape and welding two ends thereof,
the rolling element fall-off prevention member including
a plurality of pillar portions extending in an axial direction and arranged to form the plurality of window portions each spaced in a circumferential direction by a distance shorter than a diameter of the rolling elements, and
a connecting portion extending in the circumferential direction and connecting ends of the plurality of pillar portions,
the connecting portion including
a welded portion,
a first cut portion provided at a position avoiding the pillar portions, and
a second cut portion provided at a position avoiding the pillar portions and the first cut portion,
as viewed in the axial direction,
the first cut portion and the second cut portion each being provided within an angle range of not less than 45° and not more than 315° from the welded portion around a center of the shaft, and
the second cut portion being provided at a position of the window portion located at a position corresponding to 180°, or at a position of the window portion adjacent to the window portion located at the position corresponding to 180°, with respect to a position of the first cut portion around the center of the shaft.

2. The rolling bearing according to claim 1, wherein
the first cut portion is located 90° away from the welded portion around the center of the shaft, and
the second cut portion is located 270° away from the welded portion around the center of the shaft.

3. The rolling bearing according to claim 1 or 2, wherein
the connecting portion further includes
a third cut portion provided at a position avoiding the pillar portions, the first cut portion, and the second cut portion, and
a fourth cut portion provided at a position avoiding the pillar portions, the first cut portion, the second cut portion, and the third cut portion,
the third cut portion and the fourth cut portion are each provided within an angle range of not less than 45° and not more than 315° from the welded portion around the center of the shaft, and
the fourth cut portion is provided at a position of the window portion located at a position corresponding to 180°, or at a position of the window portion adjacent to the window portion located at the position corresponding to 180°, with respective to a position of the third cut portion around the center of the shaft.

4. The rolling bearing according to claim 3, wherein
the first cut portion is located 45° away from the welded portion around the center of the shaft,
the second cut portion is located 225° away from the welded portion around the center of the shaft,
the third cut portion is located 135° away from the welded portion around the center of the shaft, and
the fourth cut portion is located 315° away from the welded portion around the center of the shaft.

5. The rolling bearing according to any one of claims 1 to 4, wherein
the rolling elements are rollers, and
the rolling bearing is of a full roller type.
